# EUROPÄISCHE PATENTSCHRIFT

(11) **EP 4 408 235 B1**
(45) Veröffentlichungstag und Bekanntmachung des Hinweises auf die Patenterteilung: **05.08.2026**
(21) Anmeldenummer: 22797718.8
(22) Anmeldetag: 28.09.2022
(51) Int. Cl.: A47B 96/06, F16B 12/22, F16B 5/00

(54) **TABLARBESCHLAG UND ZUGEHÖRIGE MÖBELANORDNUNG**
SHELF FITTING AND ASSOCIATED FURNITURE ARRANGEMENT
FERRURE DE TABLETTE ET ENSEMBLE MEUBLE CORRESPONDANT

(30) Priorität: 29.09.2021 DE 202021105237 U
(43) Veröffentlichungstag der Anmeldung: 07.08.2024
(73) Patentinhaber: Häfele Berlin GmbH & Co KG, 12307 Berlin (DE)
(72) Erfinder: SAWATZKI, Gerd, 45711 Datteln (DE); BIRKNER, Robert, 12524 Berlin (DE)
(74) Vertreter: Kohler Schmid Möbus Patentanwälte
(86) Internationale Anmeldenummer: PCT/EP2022/077054
(87) Internationale Veröffentlichungsnummer: WO 2023/052472

(56) Entgegenhaltungen:
- EP-A1- 2 609 833
- WO-A1-2013/164753
- GB-A- 2 552 970

## Beschreibung

Die Erfindung betrifft einen Beschlag, insbesondere Tablarbeschlag, zum Verbinden zweier Teile, insbesondere zweier Möbelteile wie z.B. eines Tablars an einer Seitenwand, sowie eine zugehörige Anordnung mit zwei Teilen, die mittels des Beschlags miteinander verbunden sind.

Aus GB 2 552 970 A ist zum Verbinden zweier Teile ein Beschlag mit zwei Beschlagteilen bekannt. Ein erstes Beschlagteil umfasst einen ersten Montagekörper zur Montage an einem zu verbindenden ersten Teil und einen im ersten Montagekörper verschiebbar geführten Schieber, der aus einer Ausgangsstellung, in welcher mindestens ein vorderes Schieberende aus dem ersten Montagekörper vorsteht, gegen die Wirkung einer Rückstellkraft in eine Stellung, in welcher das vordere Schieberende weniger weit oder nicht aus dem ersten Montagekörper vorsteht, verschiebbar ist, wobei das vordere Schieberende einen sich in einer (Quer)Richtung quer zur Schieberichtung des Schiebers erstreckenden Verriegelungsvorsprung aufweist. Ein zweites Beschlagteil ist in Form eines zweiten Montagekörpers zur Montage an einem zu verbindenden zweiten Teil ausgebildet, wobei der zweite Montagekörper eine zum Einführen des vorderen Schieberendes ausgebildete Öffnung mit einem Hinterschnitt aufweist, der bei in die Öffnung eingeführtem vorderen Schieberende von dem Verriegelungsvorsprung hintergriffen ist. Der zweite Montagekörper weist einen der Öffnung gegenüberliegenden Öffnungsboden auf, der auf seiner dem Hinterschnitt zugewandten Seite einen parallel zur Öffnung verlaufenden, parallelen Bodenabschnitt aufweist, dessen Abstand zum Hinterschnitt der Dicke des Verriegelungsvorsprungs entspricht.

Ein aus EP 2 609 833 A1 bekannter Beschlag dient zum Befestigen und Tragen eines Regalbretts an einer Möbelseitenwand und umfasst ein erstes Verbindungselement an der Möbelseitenwand und ein zweites Verbindungselement an dem Regalbrett. Das erste Verbindungselement bildet den Sitz, in den das aus einem gefederten Stift bestehende zweite Verbindungselement eingreift, wobei das erste und/oder das zweite Verbindungselement mit einer Fläche versehen ist, die in Bezug auf die Fläche des an der Wand zu installierenden Regalbretts geneigt ist.

Diese geneigte Fläche ermöglicht es, das Einstecken und das Austreten des gefederten Stifts automatisch in Bezug auf den Sitz durch die Verschiebung des Regalbretts in einer Richtung parallel zu der Möbelseitenwand zu führen. Das erste Verbindungselement besteht aus einer Hülse, die mit einer Öffnung für den Durchgang des gefederten Stifts versehen ist, wobei die geneigte Fläche in der Öffnung ausgebildet ist. Das zweite Verbindungselement umfasst einen hohlen Körper, in den ein geformter hohler Stift eingesteckt ist, der durch eine Spiralfeder gedrückt wird, die zwischen dem geschlossenen Boden des hohlen Körpers und dem Kopf des hohlen Stifts wirkt. Der Kopf des Stifts erstreckt sich axial außerhalb des Körpers mit einem ambossförmigen Zinken und einer Rippe orthogonal zu dem Zinken und ist in Bezug auf die Achse des Kopfs geneigt. Der Zinken und die Rippe sind einstückig miteinander ausgebildet und bilden ein Führungselement, das mit der Öffnung des ersten Elements zusammenwirkt, um das zweite Element in das erste Element einzustecken und von diesem zu trennen.

Aus WO 2013/164753 A1 ist ebenfalls ein Beschlag zum Befestigen und Tragen eines Regalbretts an einer Möbelseitenwand bekannt. Der Beschlag umfasst einen eindrückbaren Pin an der Möbelseitenwand und ein Blockierelement in einem Längskanal des Regalbretts. Das Blockierelement hat für den Pin einen sich verengenden Längsschlitz, der am verengten Schlitzende in eine größere, kreisrunde Schlitzöffnung mündet, in welcher der Pin verrastet ist.

Demgegenüber liegt der vorliegenden Erfindung die Aufgabe zugrunde, einen möglichst einfach aufgebauten Beschlag zum Verbinden zweier Teile anzugeben.

Diese Aufgabe wird erfindungsgemäß durch einen Beschlag mit den Merkmalen von Anspruch 1 gelöst.

Erfindungsgemäß weist der zweite Montagekörper einen der Öffnung gegenüberliegenden Öffnungsboden auf, der auf seiner dem Hinterschnitt zugewandten Seite einen parallel zur Öffnung verlaufenden, parallelen Bodenabschnitt aufweist, dessen Abstand zum Hinterschnitt der Dicke des Verriegelungsvorsprungs entspricht. Der Öffnungsboden kann auf seiner dem Hinterschnitt abgewandten Seite einen schrägen Bodenabschnitt aufweisen, welcher gegenüber dem parallelen Bodenabschnitt in Richtung hin zum Hinterschnitt geneigt ist und mit der Schrägfläche des vorderen Schieberendes zusammenwirkt.

Der erfindungsgemäße Beschlag stellt eine unsichtbare, federnde Verriegelung dar.

Die Rückstellkraft kann beispielsweise durch eine Feder, insbesondere Druckfeder, gegeben sein, die sowohl am ersten Montagekörper als auch am Schieber abgestützt ist.

In einer bevorzugten Ausführungsform weist das vordere Schieberende auf der dem Verriegelungsvorsprung abgewandten Seite eine Schrägfläche auf, die in Richtung fort vom Verriegelungsvorsprung gerichtet und sowohl gegenüber der Schieberichtung als auch gegenüber der Querrichtung geneigt ist.

Besonders bevorzugt weisen der Verriegelungsvorsprung und der zweite Montagekörper Rastelemente auf, die, wenn das vordere Schieberende von dem Verriegelungsvorsprung hintergriffen ist, miteinander verrastet sind. Beispielsweise können der Verriegelungsvorsprung auf seiner dem ersten Montagekörper zugewandten Rückseite und der Hinterschnitt auf seiner Innenseite jeweils miteinander zusammenwirkende Rastelemente aufweisen, z.B. ein Rastvorsprung und eine Rastausnehmung. Alternativ können der Verriegelungsvorsprung auf seiner dem ersten Montagekörper abgewandten Vorderseite und der zweite Montagekörper ein damit zusammenwirkendes Rastelement aufweisen.

In einer nicht erfindungsgemäßen Ausführungsform weist die Öffnung des zweiten Montagekörpers ein Schlüsselloch mit einer Einführöffnung zum Einführen des vorderen Schieberendes und mit einer sich an die Einführöffnung anschließenden, gegenüber der Einführöffnung verengten Schlitzöffnung zum Hintergreifen des Hinterschnitts des vorderen Schieberendes aufweist. Vorzugsweise weist die Vorderseite des zweiten Montagekörpers auf der der Schlitzöffnung abgewandten Seite des Schlüssellochs eine in die Einführöffnung mündende Zusatzöffnung mit einem schrägen Öffnungsboden auf, dessen auf die Vorderseite bezogene Tiefe, gesehen in Richtung fort von der Einführöffnung, kontinuierlich bis auf das Niveau der Vorderseite abnimmt, um den Schieber gegen die Wirkung der Rückstellkraft in die hintere Endstellung zu verschieben. Dabei entspricht die Tiefe des schrägen Öffnungsbodens an der Einführöffnung bevorzugt mindestens der Summe des Abstands der Stirnseite zum Hinterschnitt des vorderen Schieberendes und der Dicke einer die Schlitzöffnung definierenden Öffnungswand des zweiten Montagekörpers.

Die Erfindung betrifft auch eine Anordnung, insbesondere Möbelanordnung, mit zwei Teilen und mit einem wie oben ausgebildeten Beschlag, wobei das erste Beschlagteil an dem einen, ersten Teil und das zweite Beschlagteil an dem anderen, zweiten Teil montiert sind und wobei das vordere Schieberende des ersten Beschlagteils in die Öffnung eingeführt ist und mit dem Verriegelungsvorsprung den Hinterschnitt hintergreift.

Vorzugsweise sind das erste Beschlagteil mit seinem ersten Montagekörper in einer Bohrung, insbesondere Langlochbohrung, des ersten Teils und das zweite Beschlagteil mit seinem zweiten Montagekörper in einer Bohrung, insbesondere Langlochbohrung, des zweiten Teils montiert. Die Vorderseiten der beiden Montagekörper schließen jeweils bündig mit den beiden Teilen ab und liegen aneinander an.

Besonders bevorzugt sind ein am Verriegelungsvorsprung rückseitig angeordnetes Rastelement und ein am Hinterschnitt innenseitig angeordnetes Rastelement miteinander verrastet.

Weitere Vorteile der Erfindung ergeben sich aus der Beschreibung, den Ansprüchen und der Zeichnung. Ebenso können die vorstehenden genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: zwei unterschiedliche Explosionsdarstellungen des aus zwei Beschlagteilen gebildeten, erfindungsgemäßen Beschlags;
- Fign. 2a, 2b: zwei mittels des erfindungsgemäßen Beschlags miteinander zu verbindende Möbelteile;
- Fign. 3a-3e: die Montageschritte zum Verbinden der beiden in Fig. 2 gezeigten Möbelteile mittels des erfindungsgemäßen Beschlags;
- Fig. 4: eine nicht erfindungsgemäße, zweite Ausführungsform eines aus zwei Beschlagteilen gebildeten, Beschlags;
- Fign. 5a, 5b: das eine, erste Beschlagteil der zweiten Ausführungsform in einer perspektivischen Ansicht (Fig. 5a) bei abgenommener, oberer Gehäusehälfte und in einer Explosionsansicht (Fig. 5b);
- Fign. 6a, 6b: das andere, zweite Beschlagteil der zweiten Ausführungsform in einem Längsschnitt (Fig. 6a) und in einer Frontansicht (Fig. 6b);
- Fign. 7a-7e: die Funktionsweise des Beschlags der zweiten Ausführungsform, jeweils in einem Längsschnitt; und
- Fign. 8a-8e: die Montageschritte zum Verbinden zweier Möbelteile mittels des Beschlags der zweiten Ausführungsform.

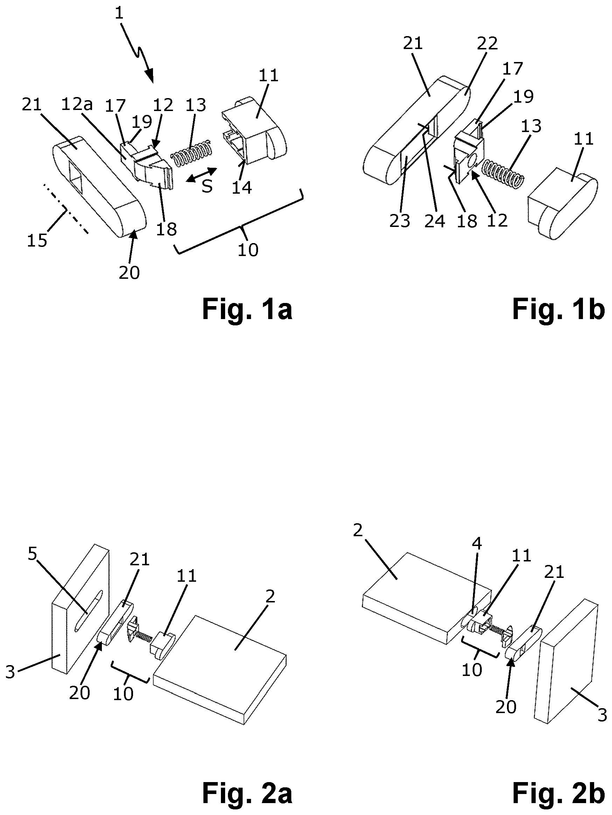

Der in **Fign. 1a, 1b** gezeigte Beschlag **1** dient zum Verbinden zweier Möbelteile, hier eines Tablars **2** an einer Seitenwand **3** (Fig. 2a, 2b), und weist zwei Beschlagteile **10, 20** auf.

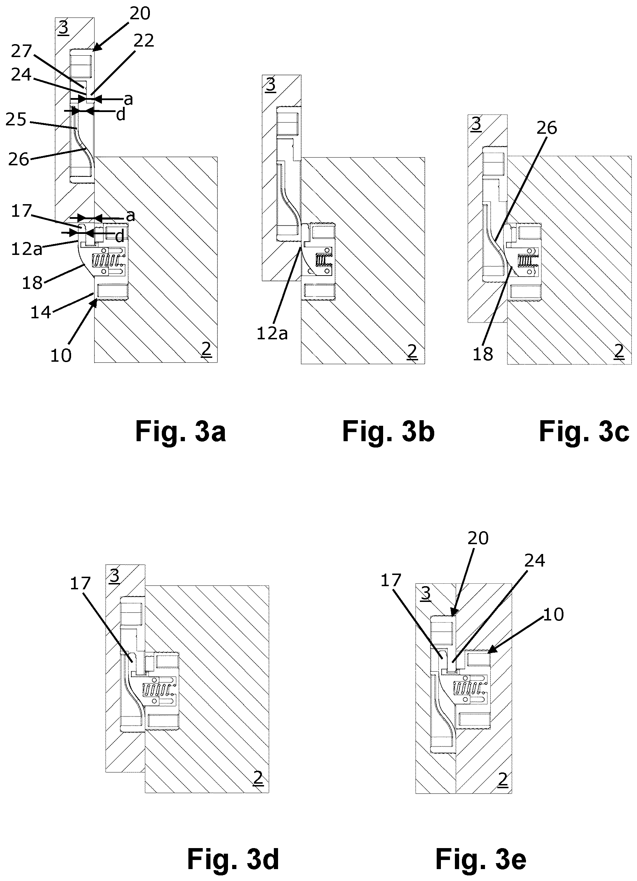

Das erste Beschlagteil 10 weist einen ersten Montagekörper (Tablargehäuse) **11,** einen darin gradlinig verschiebbar geführten Schieber **12** und eine Druckfeder **13** auf, die einenends am ersten Montagekörper 11 und anderenends am Schieber 12 abgestützt ist. Der Schieber 12 ist aus einer in Fig. 3a gezeigten Ausgangsstellung, in welcher ein vorderes Schieberende **12a** aus dem ersten Montagekörper 11 vorsteht, gegen die Wirkung der Druckfeder 13 in eine Stellung verschiebbar, in welcher das vordere Schieberende 12a weniger weit aus dem ersten Montagekörper 11 vorsteht. Vorzugsweise ist das vordere Schieberende 12a bis in eine mit einer Vorderseite **14** des ersten Montagekörpers 11 bündige Stellung in den ersten Montagekörper 11 hinein verschiebbar. Der Schieber 12 ist im ersten Montagekörper 11 beispielsweise mittels einer Schwalbenschwanzführung verschiebbar geführt, wobei innere Anschläge im ersten Montagekörper 11 das Herausschieben des Schiebers 12 aus dem ersten Montagekörper 11 verhindern.

Das vordere Schieberende 12a weist einen sich in einer (Quer)Richtung **15** quer, hier rechtwinklig, zur Schieberichtung **S** des Schiebers 12 erstreckenden Verriegelungsvorsprung **17** und auf der dem Verriegelungsvorsprung 17 abgewandten Seite eine Schrägfläche **18** auf. Diese Schrägfläche 18 ist in Richtung fort vom Verriegelungsvorsprung 17 gerichtet und sowohl gegenüber der Schieberichtung

S als auch gegenüber der Querrichtung 15 geneigt, hier um ca. 45°. Auf seiner dem ersten Montagekörper 11 zugewandten Rückseite weist der Verriegelungsvorsprung 17 ein Rastelement **19,** hier in Form einer Rastaufnahme, auf.

Das zweite Beschlagteil 20 ist ein zweiter Montagekörper (Seitengehäuse) **21** mit einer Vorderwand **22,** die eine Öffnung **23** zum Einführen des vorderen Schieberendes 12a aufweist. Die Öffnung 23 hat einen von der Vorderwand 22 gebildeten Hinterschnitt **24.** Der zweite Montagekörper 21 weist einen der Öffnung 23 gegenüberliegenden Öffnungsboden auf, der auf seiner dem Hinterschnitt 24 zugewandten Seite einen parallel zur Vorderwand 22 bzw. zur Öffnung 23 verlaufenden, parallelen Bodenabschnitt **25** hat (Fig. 3a), dessen Abstand zum Hinterschnitt 24 der Dicke **d** des Verriegelungsvorsprungs 17 entspricht. Auf seiner dem Hinterschnitt 24 abgewandten Seite weist der Öffnungsboden einen schrägen Bodenabschnitt **26** auf (Fig. 3a), welcher gegenüber dem parallelen Bodenabschnitt 25 in Richtung hin zum Hinterschnitt 24 geneigt ist, hier unter ca. 45°. Auf seiner Innenseite weist der Hinterschnitt 24 ein Rastelement **27,** hier in Form eines Rastvorsprungs, auf. In der Ausgangsstellung des Schiebers 12 entspricht der Abstand des Verriegelungsvorsprungs 17 zu der Vorderseite 14 des ersten Montagekörpers 11 der Wandstärke **a** der den Hinterschnitt 24 ausbildenden Vorderwand 22 des zweiten Montagekörpers 21.

Wie in **Fign. 2a, 2b** gezeigt, werden das erste Beschlagteil 10 mit seinem ersten Montagekörper 11 in einer waagerechten stirnseitigen Langlochbohrung oder - fräsung **4** des Tablars 2 und das zweite Beschlagteil 20 mit seinem zweiten Montagekörper 21 in einer waagerechten Langlochbohrung oder -fräsung **5** der Seitenwand 3 montiert. Vorzugsweise schließen die Vorderseite 14 des ersten Montagekörpers 11 bündig mit dem Tablar 2 und die Vorderseite 22 des zweiten Montagekörpers 21 bündig mit der Seitenwand 3 ab.

In **Fign. 3a-3e** sind die einzelnen Montageschritte zum Verbinden des Tablars 2 an der Seitenwand 3 mittels des Beschlags 1 gezeigt, jeweils in einem horizontalen Längsschnitt des Tablars 2 und der Seitenwand 3.

Das waagerechte Tablar 2 wird von vorne zwischen zwei Seitenwände 3 eingesetzt, bis der Verriegelungsvorsprung 17 vorne an der Seitenwand 3 anliegt (Fig. 3a).

Der Schieber 12 wird manuell in den ersten Montagekörper 11 eingedrückt und dann das Tablar 2 in Querrichtung 15 weiter nach hinten geschoben (Fig. 3b). Bedingt durch die Federkraft der Druckfeder 13 wird das vordere Schieberende 12a über die Schrägfläche 18 und den schrägen Bodenabschnitt 26, die beide aneinander abgleiten, in die Öffnung 23 des zweiten Montagekörpers 21 gedrückt (Fig. 3c), bis das vordere Schieberende 12a am parallelen Bodenabschnitt 25 anliegt und die Vorderseiten 14, 22 der beiden Montagekörpers 11, 21 aneinander anliegen (Fig. 3d). Der Schieber 12 hat nun seine Endposition erreicht.

Das Tablar 2 wird weiter nach hinten geschoben, bis das Tablar 32 hinten bündig mit der Seitenwand 3 abschließt. Dadurch hintergreift der Verriegelungsvorsprung 17 den Hinterschnitt 24 und liegt einerseits am parallelen Bodenabschnitt 25 und andererseits am Hinterschnitt 24 an. Zusätzlich sind die Rastelemente 19, 27 des Verriegelungsvorsprungs 17 und des Hinterschnitts 24 miteinander verrastet (Fig. 3e). Wie in Fig. 3e gezeigt, kann das Tablar 32 dabei auch vorne bündig mit der Seitenwand 3 abschließen.

Der Demontagevorgang verläuft entsprechend rückwärts zum beschriebenen Montagevorgang ab.

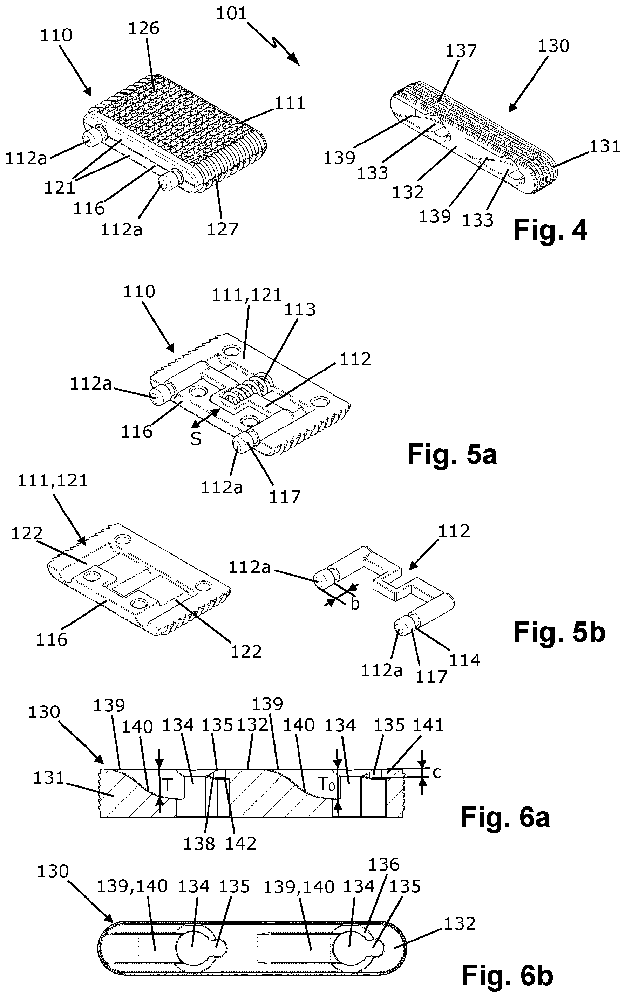

Vom Tablarbeschlag 1 der Fign. 1-3 unterscheidet sich der in **Fign. 4-6** gezeigte nicht erfindungsgemäße Tablarbeschlag **101** dadurch, dass beim ersten Beschlagteil **110** der Schieber **112** gabelförmig mit zwei sich quer, hier rechtwinklig, zur Schieberichtung S des Schiebers 112 vorspringenden Verriegelungsvorsprüngen **117** ausgebildet ist, welche durch zwei jeweils einen Hinterschnitt **114** aufweisende, hier stiftförmige, vordere Schieberenden **112a** gebildet sind, und dass beim zweiten Beschlagteil **130** der zweite Montagekörper 131 zwei in Breitenrichtung der Vorderseite **132** beabstandete, vorderseitige Öffnungen aufweist, die jeweils als Schlüssellöcher **133** ausgebildet sind. Der Hinterschnitt 114 kann ein Absatz des Verriegelungsvorsprungs sein und, wie gezeigt, beispielsweise durch eine Ringnut gebildet sein.

Die Schlüssellöcher 133 haben jeweils eine hier runde Einführöffnung 134 zum Einführen des vorderen Schieberendes 112a und eine sich in Breitenrichtung, in Fig. 6b rechts, an die Einführöffnung 134 anschließende, gegenüber der Einführöffnung 134 verengte Schlitzöffnung **135** zum Hintergreifen des Hinterschnitts 114 des Verriegelungsvorsprungs 117. Eine Fase **136** an der Einführöffnung 134 erleichtert das Einführen des vorderen Schieberendes 112a. Auf der der Schlitzöffnung **135** abgewandten Seite des Schlüssellochs **133** mündet jeweils eine Zusatzöffnung **139** in die Einführöffnung **134.** Die Zusatzöffnung 139 hat einen schrägen Öffnungsboden **140,** dessen auf die Vorderseite 132 bezogene Tiefe **T,** gesehen in Richtung fort von der Einführöffnung 134, kontinuierlich bis auf das Niveau der Vorderseite 132 abnimmt. Die Tiefe T₀ an der Einführöffnung 134 entspricht mindestens einer Eintauchtiefe des vorderen Schieberendes 112a, welche durch die Summe des Abstands **b** der Stirnseite zum Hinterschnitt 114 des vorderen Schieberendes 112a und der Dicke c der die Schlitzöffnung 135 und einen Hinterschnitt **142** definierenden Öffnungswand **141** des zweiten Montagekörpers 131 definiert ist, also T₀ ≥ a+d.

Der erste Montagekörper 111 kann optional aus zwei insbesondere baugleichen Gehäusehälften **121** gebildet sein, die jeweils innenseitig eine Führungsaussparung **122** für den Schieber 112 aufweisen. Weiter optional kann der erste Montagekörper 111 außenseitige Vorsprünge **126** und außenseitige Querrippen **127** aufweisen.

Die Öffnungswand 141 des zweiten Montagekörpers 131 weist optional entlang der Schlitzöffnung 135 eine schräg nach hinten laufende Anzugskontur **138** für den Hinterschnitt 114 des vorderen Schieberendes 112a auf, um das erste und das zweite Beschlagteil 110, 130 in gegenseitige Anlage heranzuziehen. Weiter optional kann der zweite Montagekörper 131 außenseitige Querrippen **137** aufweisen.

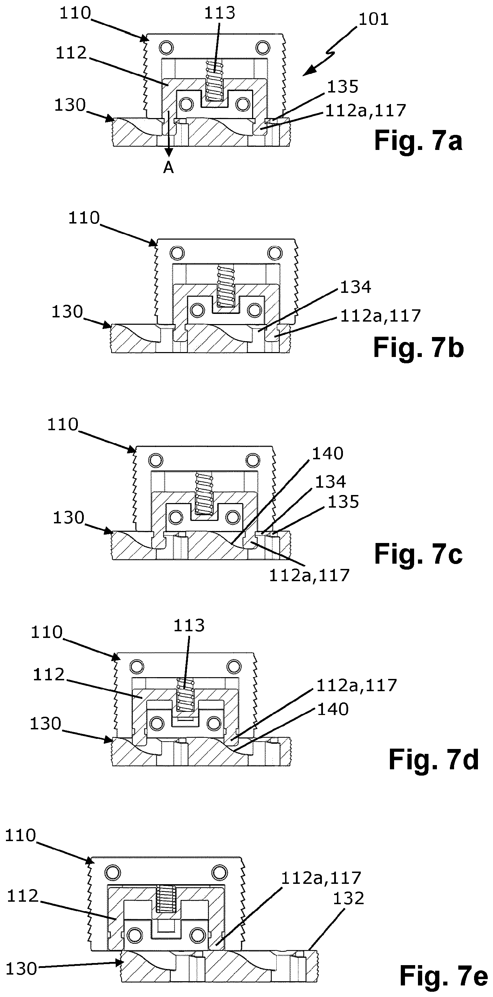

In **Fign. 7a-7e** ist die Funktionsweise des Tablarbeschlags 101 gezeigt.

In Fig. 7a liegen die beiden Beschlagteile 110, 130 mit ihren Vorderseiten **116,** 132 aneinander an, und das erste Beschlagteil 110 ist gegenüber dem zweiten Beschlagteil 130 soweit querverschoben, bis die vorderen Schieberenden 112a, angetrieben von der Druckfeder **113,** in die Einführöffnungen 134 in Einführrichtung **117a** eingetreten sind.

In Fig. 7b ist das erste Beschlagteil 110 gegenüber dem zweiten Beschlagteil 130 nach rechts querverschoben, bis die eingeführten Verriegelungsvorsprünge 117 jeweils mit ihrem Hinterschnitt 114 in die Schlitzöffnung 135 eingetreten sind und die Öffnungswand 141 in Einführrichtung **A** hintergreifen. Dadurch ist das erste Beschlagteil 110 am zweiten Beschlagteil 130 entgegen der Einführrichtung 117a verriegelt.

Zur Demontage wird das erste Beschlagteil 110 gegenüber dem zweiten Beschlagteil 130 nach links querverschoben, bis die vorderen Schieberenden 112a aus der Schlitzöffnung 135 ausgetreten und über die Einführöffnungen 134 hinweg geschoben sind und auf den schrägen Öffnungsboden 140 treffen (Fig. 7c).

Beim weiteren Querverschieben des ersten Beschlagteils 110 nach links werden die vorderen Schieberenden 112a dann an dem schrägen Öffnungsboden 140 - und damit auch der Schieber 112 - gegen die Kraft der Druckfeder 113 zurückgeschoben (Fig. 7d), bis sie schließlich in der hinteren Schieberposition an der Vorderseite 132 anliegen (Fig. 7e).

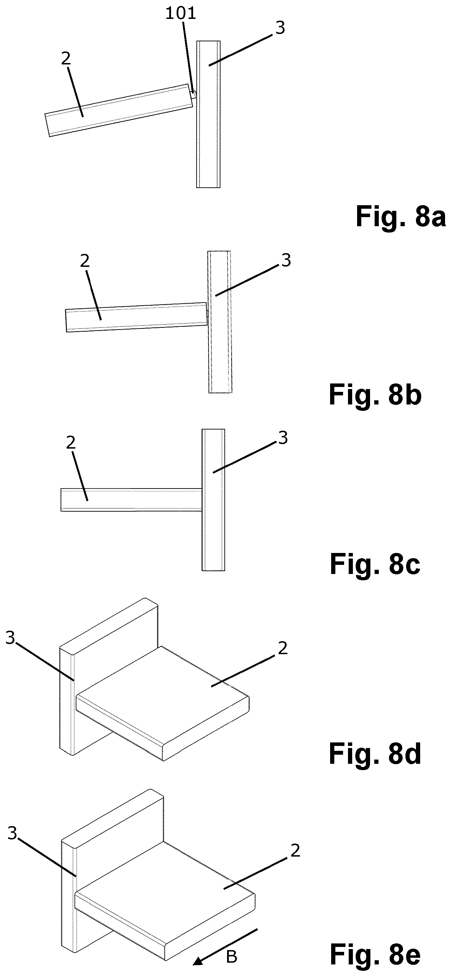

In **Fign. 8a-8e** sind die einzelnen Montageschritte zum Verbinden des Tablars 2 an der Seitenwand 3 mittels des Tablarbeschlags 101 gezeigt.

Das Tablar 2 wird zwischen zwei vertikalen Seitenwänden 3 zunächst gekippt eingefügt (Fig. 8a) und dann in die horizontale Lage ausgerichtet, wodurch die vorderen Schieberenden 112a von der Seitenwand 3 gegen die Wirkung der Druckfeder 113 in ihre hintere Stellung zurückgeschoben werden (Fig. 8b). Das Tablar 2 wird in vertikaler und in Tiefenrichtung querverschoben, bis die vorderen Schieberenden 112a, angetrieben von der Druckfeder 113, in die Einführöffnungen 134 eintauchen (Fign. 8c, 8d). Das Tablar 2 wird gegenüber der Seitenwand 3 weiter nach hinten gedrückt (Pfeilrichtung **B),** bis die vorderen Schieberenden 112a jeweils in die Schlitzöffnung 135 eingetreten sind und Verriegelungsvorsprünge 115 mit ihrem Hinterschnitt 114 die Öffnungswand 141 in Einführrichtung 117a hintergreifen (Fig. 8e). Der Tablarbeschlag 101 ermöglicht eine werkzeuglose Montage und Demontage, wobei der montierte Tablarbeschlag 101 unsichtbar ist.

## Patentansprüche

1. Beschlag (1), insbesondere Tablarbeschlag, zum Verbinden zweier Teile (2, 3), insbesondere zweier Möbelteile, aufweisend
- ein erstes Beschlagteil (10) mit einem ersten Montagekörper (11) zur Montage an einem zu verbindenden ersten Teil (2) und mit einem im ersten Montagekörper (11) verschiebbar geführten Schieber (12), der aus einer Ausgangsstellung, in welcher mindestens ein vorderes Schieberende (12a) aus dem ersten Montagekörper (11) vorsteht, gegen die Wirkung einer Rückstellkraft in eine Stellung, in welcher das vordere Schieberende (12a) weniger weit oder nicht aus dem ersten Montagekörper (11) vorsteht, verschiebbar ist, wobei das vordere Schieberende (12a) einen sich in einer (Quer)Richtung (15) quer zur Schieberichtung (S) des Schiebers (12; 112) erstreckenden Verriegelungsvorsprung (17) aufweist, und
- ein zweites Beschlagteil (20) in Form eines zweiten Montagekörpers (21) zur Montage an einem zu verbindenden zweiten Teil (3), wobei der zweite Montagekörper (21) eine Vorderwand (22) mit einer zum Einführen des vorderen Schieberendes (12a) ausgebildeten Öffnung (23) aufweist und wobei die Öffnung (23) einen von der Vorderwand (22) gebildeten Hinterschnitt (24) aufweist, der bei in die Öffnung (23) eingeführtem vorderen Schieberende (12a) von dem Verriegelungsvorsprung (17) hintergriffen ist,
wobei der zweite Montagekörper (21) einen der Öffnung (23) gegenüberliegenden Öffnungsboden aufweist, der auf seiner dem Hinterschnitt (24) zugewandten Seite einen parallel zur Öffnung (23) verlaufenden, parallelen Bodenabschnitt (25) aufweist, dessen Abstand zum Hinterschnitt (24) der Dicke (d) des Verriegelungsvorsprungs (17) entspricht.

2. Beschlag nach Anspruch 1, **dadurch gekennzeichnet, dass** die Rückstellkraft durch eine Feder, insbesondere Druckfeder (13), gegeben ist, die sowohl am ersten Montagekörper (11) als auch am Schieber (12) abgestützt ist.

3. Beschlag nach Anspruch 1 oder 2, **dadurch gekennzeichnet, dass** das vordere Schieberende (12a) auf der dem Verriegelungsvorsprung (17) abgewandten Seite eine Schrägfläche (18) aufweist, die in Richtung fort vom Verriegelungsvorsprung (17) gerichtet und sowohl gegenüber der Schieberichtung (16) als auch gegenüber der Querrichtung (15) geneigt ist.

4. Beschlag nach einem der vorhergehenden Ansprüche, **dadurch gekennzeichnet, dass** der Schieber (12) im ersten Montagekörper (11) mittels einer Schwalbenschwanzführung verschiebbar geführt ist.

5. Beschlag nach einem der vorhergehenden Ansprüche, **dadurch gekennzeichnet, dass** der Verriegelungsvorsprung (17) und der zweite Montagekörper (21) jeweils Rastelemente (19, 27) aufweisen, die, wenn das vordere Schieberende (12a) von dem Verriegelungsvorsprung (17) hintergriffen ist, miteinander verrastet sind.

6. Beschlag nach einem der vorhergehenden Ansprüche, **dadurch gekennzeichnet, dass** in der Ausgangsstellung des Schiebers (12) der Abstand des Verriegelungsvorsprungs (17) zu einer Vorderseite (14) des ersten Montagekörpers (11) mindestens der Wandstärke (a) einer den Hinterschnitt (24) ausbildenden Wand (22) des zweiten Montagekörpers (21), insbesondere genau der Wandstärke (a), entspricht.

7. Beschlag nach einem der vorhergehenden Ansprüche, **dadurch gekennzeichnet, dass** der Öffnungsboden auf seiner dem Hinterschnitt (24) abgewandten Seite einen schrägen Bodenabschnitt (26) aufweist, welcher gegenüber dem parallelen Bodenabschnitt (25) in Richtung hin zum Hinterschnitt (24) geneigt ist.

8. Beschlag nach einem der vorhergehenden Ansprüche, **dadurch gekennzeichnet, dass** der Schieber (12) in den ersten Montagekörper (11) hinein bis in eine mit einer Vorderseite (14) des ersten Montagekörpers (11) bündige Stellung verschiebbar ist.

9. Anordnung, insbesondere Möbelanordnung, mit zwei Teilen (2, 3) und mit einem Beschlag (1) nach einem der vorhergehenden Ansprüche, wobei das erste Beschlagteil (10) an dem einen, ersten Teil (2) und das zweite Beschlagteil (20) an dem anderen, zweiten Teil (3) montiert sind und wobei das vordere Schieberende (12a) in die Öffnung (23) eingeführt ist und mit dem Verriegelungsvorsprung (17) den Hinterschnitt (24) hintergreift.

10. Anordnung nach Anspruch 9, **dadurch gekennzeichnet, dass** das erste Beschlagteil (10) mit seinem ersten Montagekörper (11) in einer Aussparung (4), insbesondere Langlochbohrung oder -fräsung, des ersten Teils (2) und das zweite Beschlagteil (20) mit seinem zweiten Montagekörper (21) in einer Aussparung (5), insbesondere Langlochbohrung oder -fräsung, des zweiten Teils (3) montiert sind.

11. Anordnung nach Anspruch 9 oder 10, **dadurch gekennzeichnet, dass** ein am Verriegelungsvorsprung (17) rückseitig angeordnetes Rastelement (19) und ein am Hinterschnitt (24) innenseitig angeordnetes Rastelement (27) miteinander verrastet sind.

12. Anordnung nach einem der Ansprüche 9 bis 11, **dadurch gekennzeichnet, dass** die Vorderseite (14) des ersten Montagekörpers (11) bündig mit dem ersten Teil (2) und die Vorderseite (22) des zweiten Montagekörpers (21) bündig mit dem zweiten Teil (3) abschließen.

13. Anordnung nach einem der Ansprüche 9 bis 12, **dadurch gekennzeichnet, dass** die Vorderseite (14) des ersten Montagekörpers (11) und die Vorderseite (22) des zweiten Montagekörpers (21) aneinander anliegen.

## Claims

1. A fitting (1), in particular a shelf fitting, for connecting two parts (2, 3), in particular two furniture parts, comprising
- a first fitting part (10) with a first installation body (11) for mounting on a first part (2) to be connected, and with a slider (12), which is movably guided in the first installation body (11) and can be moved against the action of a restoring force from a starting position, in which at least one front slider end (12a) protrudes out of the first installation body (11), into a position in which the front slider end (12a) protrudes less far or does not protrude out of the first installation body (11), wherein the front slider end (12a) has a locking projection (17), which extends transversely to the sliding direction (S) of the slider (12; 112) in a (transverse) direction (15), and
- a second fitting part (20) in the form of a second installation body (21) for mounting on a second part (3) to be connected, wherein the second installation body (21) has a front wall (22) with an opening (23), which is configured for inserting the front slider end (12a) and has an undercut (24), which is formed by the front wall (22) and is engaged from behind by the locking projection (17) when the front slider end (12a) is inserted into the opening (23),
wherein the second installation body (21) has an opening base, which is situated opposite the opening (23) and, on its side facing the undercut (24), has a parallel base portion (25), which runs parallel to the opening (23) and the distance of which from the undercut (24) corresponds to the thickness (d) of the locking projection (17).

2. The fitting as claimed in claim 1, **characterized in that** the restoring force is provided by a spring, in particular a compression spring (13), which is supported both on the first installation body (11) and on the slider (12).

3. The fitting as claimed in claim 1 or 2, **characterized in that** the front slider end (12a) has, on its side facing away from the locking projection (17), an oblique surface (18) which is directed away from the locking projection (17) and slopes both relative to the sliding direction (16) and relative to the transverse direction (15).

4. The fitting as claimed in any of the preceding claims, **characterized in that** the slider (12) is guided movably in the first installation body (11) by means of a dovetail guide.

5. The fitting as claimed in any of the preceding claims, **characterized in that** the locking projection (17) and the second installation body (21) have respective latching elements (19, 27), which are latched together when the front slider end (12a) is engaged from behind by the locking projection (17).

6. The fitting as claimed in any of the preceding claims, **characterized in that** the distance between the locking projection (17) and the front side (14) of the first installation body (11) in the starting position of the slider (12) corresponds at least to the wall thickness (a) of a wall (22), forming the undercut (24), of the second installation body (21), in particular corresponds precisely to the wall thickness (a).

7. The fitting as claimed in any of the preceding claims, **characterized in that** the opening base has, on its side facing away from the undercut (24), an oblique base portion (26), which slopes relative to the parallel base portion (25) in a direction toward the undercut (24).

8. The fitting as claimed in any of the preceding claims, **characterized in that** the slider (12) can be moved into the first installation body (11) as far as a position in which it is flush with a front side (14) of the first installation body (11).

9. An assembly, in particular a furniture assembly, comprising two parts (2, 3) and a fitting (1) as claimed in any of the preceding claims, wherein the first fitting part (10) is mounted on the one, first part (2), and the second fitting part (20) is mounted on the other, second part (3), and wherein the front slider end (12a) is inserted into the opening (23) and engages behind the undercut (24) by means of the locking projection (17).

10. The assembly as claimed in claim 9, **characterized in that** the first fitting part (10) is mounted by means of its first installation body (11) in a recess (4), in particular an elongate drilled or milled hole, in the first part (2), and the second fitting part (20) is mounted by means of its second installation body (21) in a recess (5), in particular an elongate drilled or milled hole, in the second part (3).

11. The assembly as claimed in claim 9 or 10, **characterized in that** a latching element (19) arranged on the rear side of the locking projection (17) and a latching element (27) arranged on the inside of the undercut (24) are latched together.

12. The assembly as claimed in any of claims 9 to 11, **characterized in that** the front side (14) of the first installation body (11) ends flush with the first part (2), and the front side (22) of the second installation body (21) ends flush with the second part (3).

13. The assembly as claimed in any of claims 9 to 12, **characterized in that** the front side (14) of the first installation body (11) and the front side (22) of the second installation body (21) rest against one another.

## Revendications

1. Ferrure (1), en particulier ferrure d'étagère, pour la connexion de deux éléments (2, 3), en particulier deux éléments de meuble, comprenant
- une première partie de ferrure (10) avec un premier corps de montage (11) destiné au montage sur un premier élément (2) à connecter et avec un coulisseau (12) guidé de manière coulissante dans le premier corps de montage (11), lequel, à partir d'une position de départ dans laquelle au moins une extrémité avant du coulisseau (12a) fait saillie du premier corps de montage (11), est déplaçable, contre l'action d'une force de rappel, dans une position dans laquelle l'extrémité avant du coulisseau (12a) fait moins saillie ou ne fait pas saillie du premier corps de montage (11), l'extrémité avant du coulisseau (12a) présentant une saillie de verrouillage (17) s'étendant dans une direction transversale (15) par rapport à la direction de déplacement du coulisseau (S) du coulisseau (12 ; 112), et
- une seconde partie de ferrure (20) sous forme d'un second corps de montage (21) destiné au montage sur un second élément (3) à connecter, le second corps de montage (21) présentant une paroi avant (22) avec une ouverture (23) conçue pour l'introduction de l'extrémité avant du coulisseau (12a), et l'ouverture (23) présentant une contre-dépouille (24) formée par la paroi avant (22), laquelle, lorsque l'extrémité avant du coulisseau (12a) est introduite dans l'ouverture (23), est engagée par la saillie de verrouillage (17),
le second corps de montage (21) présentant un fond d'ouverture opposé à l'ouverture (23), lequel, sur son côté orienté vers la contre-dépouille (24), présente une section de fond parallèle (25) s'étendant parallèlement à l'ouverture (23), dont la distance à la contre-dépouille (24) correspond à l'épaisseur (d) de la saillie de verrouillage (17).

2. Ferrure selon la revendication 1, **caractérisée en ce que** la force de rappel est fournie par un ressort, en particulier un ressort de compression (13), qui est appuyé à la fois sur le premier corps de montage (11) et sur le coulisseau (12).

3. Ferrure selon la revendication 1 ou 2, **caractérisée en ce que** l'extrémité avant du coulisseau (12a) présente, sur le côté opposé à la saillie de verrouillage (17), une surface inclinée (18) qui est orientée dans la direction éloignée de la saillie de verrouillage (17) et inclinée à la fois par rapport à la direction de déplacement du coulisseau (16) et par rapport à la direction transversale (15).

4. Ferrure selon l'une des revendications précédentes, **caractérisée en ce que** le coulisseau (12) est guidé de manière coulissante dans le premier corps de montage (11) au moyen d'un guidage en queue d'aronde.

5. Ferrure selon l'une des revendications précédentes, **caractérisée en ce que** la saillie de verrouillage (17) et le second corps de montage (21) présentent chacun des éléments d'encliquetage (19, 27) qui, lorsque l'extrémité avant du coulisseau (12a) est engagée par la saillie de verrouillage (17), sont encliquetés ensemble.

6. Ferrure selon l'une des revendications précédentes, **caractérisée en ce que**, dans la position de départ du coulisseau (12), la distance de la saillie de verrouillage (17) à une face avant (14) du premier corps de montage (11) correspond au moins à l'épaisseur de paroi (a) d'une paroi (22) du second corps de montage (21) formant la contre-dépouille (24), en particulier exactement à l'épaisseur de paroi (a).

7. Ferrure selon l'une des revendications précédentes, **caractérisée en ce que** le fond d'ouverture présente, sur son côté opposé à la contre-dépouille (24), une section de fond inclinée (26) qui est inclinée par rapport à la section de fond parallèle (25) en direction de la contre-dépouille (24).

8. Ferrure selon l'une des revendications précédentes, **caractérisée en ce que** le coulisseau (12) est déplaçable dans le premier corps de montage (11) jusqu'à une position à fleur avec une face avant (14) du premier corps de montage (11).

9. Agencement, en particulier agencement de meuble, avec deux éléments (2, 3) et avec une ferrure (1) selon l'une des revendications précédentes, la première partie de ferrure (10) étant montée sur l'un, premier élément (2), et la seconde partie de ferrure (20) étant montée sur l'autre, second élément (3), et l'extrémité avant du coulisseau (12a) étant introduite dans l'ouverture (23) et, avec la saillie de verrouillage (17), engageant la contre-dépouille (24).

10. Agencement selon la revendication 9, **caractérisé en ce que** la première partie de ferrure (10) avec son premier corps de montage (11) est montée dans un évidement (4), en particulier un perçage oblong ou un fraisage oblong, du premier élément (2), et la seconde partie de ferrure (20) avec son second corps de montage (21) est montée dans un évidement (5), en particulier un perçage oblong ou un fraisage oblong, du second élément (3).

11. Agencement selon la revendication 9 ou 10, **caractérisé en ce qu'**un élément d'encliquetage (19) disposé à l'arrière de la saillie de verrouillage (17) et un élément d'encliquetage (27) disposé à l'intérieur de la contre-dépouille (24) sont encliquetés ensemble.

12. Agencement selon l'une des revendications 9 à 11, **caractérisé en ce que** la face avant (14) du premier corps de montage (11) affleure le premier élément (2) et la face avant (22) du second corps de montage (21) affleure le second élément (3).

13. Agencement selon l'une des revendications 9 à 12, **caractérisé en ce que** la face avant (14) du premier corps de montage (11) et la face avant (22) du second corps de montage (21) sont en contact l'une avec l'autre.
